Europäisches Patentamt

European Patent Office

Office européen des brevets

(11) Publication number: **0 434 403 B1**

# EUROPEAN PATENT SPECIFICATION

(45) Date of publication of patent specification: **31.08.94**  (51) Int. Cl.⁵: **B60C  15/02**, B60C 15/024, B60B 21/10

(21) Application number: **90313939.2**

(22) Date of filing: **19.12.90**

(54) **Improvements to tyre and wheel rim assemblies.**

(30) Priority: **21.12.89 GB 8928942**
**21.09.90 GB 9020590**

(43) Date of publication of application:
**26.06.91 Bulletin  91/26**

(45) Publication of the grant of the patent:
**31.08.94 Bulletin  94/35**

(84) Designated Contracting States:
**AT DE ES FR GB IT LU SE**

(56) References cited:
**FR-A- 2 261 885**
**FR-A- 2 347 211**
**LU-A- 33 419**
**LU-A- 67 264**
**US-A- 3 977 727**

(73) Proprietor: **SUMITOMO RUBBER INDUSTRIES
LIMITED
No. 1-1, Tsutsui-cho 1-chome
Chuo-ku Kobe-shi Hyogo 651 (JP)**

(72) Inventor: **Stephens, Paul
67 Alexandra Road
Halesowen, West Midlands B63 4DJ (GB)**
Inventor: **Holmes, Thomas
16 Rosslyn Road,
Walmley
Sutton Coldfield, West Midlands B76 8HE
(GB)**

(74) Representative: **Stewart, Charles Geoffrey
SP TYRES UK LIMITED
Tyre Technical Division
Fort Dunlop, Erdington, Birmingham B24 9OT
(GB)**

## Description

This invention relates to a tyre and wheel rim assembly and in particular to tubeless pneumatic tyre and wheel rim assemblies.

In conventional pneumatic tyre and wheel rim assemblies the tyre beads are retained on their respective bead seats by means of the internal air pressure and commonly by the bead seats being tapered and/or the use of a safety hump.

Deflation of the tyre, however, or operation in a partially deflated state leaves the assembly in a relatively unsafe condition in which the tyre beads may be moved from their respective bead seats by sideways force. Such a condition may affect the control and safety of the vehicle and in the case of the commonest types of wheel rim having a well to allow tyre fitting there is a grave danger of complete separation of the tyre from its wheel rim and/or contact of the wheel rim flange with the road surface. Both these conditions are dangerous.

Many suggestions have been made to deal with this problem including bead spacer rings and the tyre and wheel rim assembly known as the TD tyre which is disclosed in U K Patent Specification No 1584553.

The latter TD type of construction uses a circumferentially extending groove in the wheel rim adjacent to the bead seat and a radially and axially projecting toe on the tyre engaging in the groove. This construction, however, requires an larger well in the wheel rim than in a conventional assembly which reduces the usable volume whithin the wheel for brake space and also has a severe problem in compatibility in that the fitting of a tyre without the necessary projecting toe to the TD type of wheel rim gives an assembly which has a reduced bead retention property to a standard tyre on a standard wheel rim. This reduction in bead retention properties of a standard tyre on the wheel rim so far has made it essential for the diameter of the TD type of tyre and wheel rim to be made different from the normally accepted inch diameter tyres and wheels to ensure this mis-match cannot occur in practice. This has limited the adoption of the TD bead retention system.

Another prior art approach to the problem is disclosed in U K Patent Specification 2026957 which uses a tyre bead having a sector of the main bead region, which is the axially and radially inner portion of an otherwise normal bead, constructed so that progressive rotation of the bead generates a substantially increasing compression in the bead and thus a continually increasing tension in the bead core. This can be done either by an increase in hardness around the sector or a progressive increase in dimension. The specification requires an additional friction increasing means between the tyre contacting portion of the bead seat and the region of the bead seat which contacts the wheel rim in the normally seated condition to ensure the necessary rotation without relative slippage. Friction increasing means disclosed include knurling or other mechanically formed grooving or teeth on the bead seat of the wheel rim and thus the disclosure teaches an assembly having a bead seat on the rim which is not suitable for a standard tyre bead because of the specially machined bead seat. The tyre bead shape is not conducive to correct and secure seating or sealing of the assembly. Also reliance is made on frictional grip once the bead has rotated beyond its initial rest position and the wheel rim cannot be used for a normal tyre.

In each case of the prior art, whilst some retention may be provided, true compatibility with tyres not of the required construction has not so far been achieved and in each case either the special tyre cannot be used on a standard type rim, a standard tyre cannot be used on the special rim or both.

Thus it is the object of the present invention to provide a tyre and a wheel rim which when used together give fully effective bead retention and yet allow for alternative fitments of standard tyres or to standard rims without mis-match problems.

Accordingly the present invention provides a tyre and wheel rim assembly for a vehicle comprising the features of claim 1.

Preferably the width of the additional retention zone is 5 to 30% of the width of the bead (J dimension). More preferably the width of the additional zone is 15 to 25% of the J dimension. (In each case the J dimension is the total width of the bead of the invention). Also the bead width of the tyre from the heel point to the tip (which is the J dimension) may be greater than the axial width of the bead seat of the wheel rim so that the tip is on a portion of the rim beyond the seat.

The bead and special tooth on the wheel rim are preferably provided at both sides of the wheel rim so that both beads are retained. The bead seats may be on the radially outer surface of the wheel rim or on the radially inner surface to suit either the conventional tubeless pneumatic tyre or the alternative system known as the CTS.

The wheel rim assembly and the wheel rim may have the bead seat of any of the conventional tapered shapes including the shapes with more than one angle of taper such as the contrepente wheel rim.

2

Another aspect provides a wheel rim for the tyre and wheel rim assembly comprising a pair of bead seats axially spaced apart and adjacent to one of the bead seats and axially inwards thereof a circumferentially extending tooth having a small radius edge or top of less than 2mm radius.

Preferably the small radius is between 0.2 and 0.7mm and in particular between 0.2 and 0.3mm or even 0.2 to 0.27mm. In some cases a radius of 1.0 to 2.0mm can be used. The final choice depends on the toe material.

Three teeth may be provided although that number is not critical. The important feature is to provide at least one tooth under the tip regardless of tolerances on tyre and wheel rim dimensions.

The depth of the teeth may be in the range of 0.65 to 0.85mm and the distance from the top of one tooth to the top of the next adjacent tooth is in the range of 1.2 to 1.8mm or 1.3 to 1.8mm being 1.5mm in one embodiment.

The wheel rim immediately inboard of the bead seat may be a conventional flat ledge or more preferably it comprises a bead retaining hump of either the round hump or flat hump type. In the case of humps the tooth or teeth may be provided on the side of the hump nearer to the bead seat which ensure it is well clear of a conventional tyre fitted to the rim.

The type of flange for the wheel rim is optional and any conventional flange may be used in conjunction with the special bead of the present invention.

The resultant wheel rim provides the necessary tooth or teeth for the special tyre of the present invention but also much more importantly provides for a standard tyre bead of standard width with a bead seat which is entirely normal and which includes no special shapes or finishes. Accordingly a standard tyre can be fitted to and run on the rim of this invention without any problems and with the normal degree of bead retention for the rim type be it flat ledge, hump, flat hump or the like.

Preferably three distinct teeth are provided to give the tyre bead engaging region and the said region is positioned on a bead retaining hump provided axially inwards of and adjacent to the inner edge of the bead seat. The retaining hump may be the conventional hump as in the ETRTO Wheel Rim Standards and in that case the teeth are provided in the axially outer slope of the hump such that the top of the axially most outward tooth is coincident with the standard rim profile. The remaining teeth are equi-spaced along a straight line sloping at 15° to the horizontal so that their tops are slightly below the level of the said standard rim profile and the axially most inward groove is blended into the standard rim profile. As a result when a standard tyre is fitted to the wheel rim it is easily assembled in the same way as a normal assembly because it is effectively a standard rim. Once fully seated however a standard tyre does not reach to the teeth but sits on the normal bead seat.

Another aspect of the invention provides a tyre having in at least one bead a circumferentially extending inextensible bead hoop and an additional retention zone positioned axially inwards of and integral with the main bead region, the retention zone having an axially inner tip or toe substantially inwards of the main bead region, the construction of the bead between the bead core and the tip being such as to provide substantial form stiffness to indicated compression forces between the core and tip and the tip of the tyre being formed by a material having a set property at 70° Centigrade of greater than 40%.

The tip may be formed by a material having a hardness of 80 to 95 degrees IRH. The material may also have a tear strength at room temperature of 30N/tp or more. Tested according to ASTM624 using Die C.

Preferably the width of the additional retention zone is 5 to 30% and more preferable 15 to 25% of the width of the tyre bead (J dimension). Also the bead width of the tyre from the heel point to the tip (J dimension) is greater than the axial width of the standard bead seat dimension for the tyre of the size concerned so that the tip, when fitted to a wheel rim contacts the rim inboard of the standard seat.

The tip material may be the material of the main part of the main bead region and the additional retention zone as long as the required properties are provided at the tip. More preferably, however, the tip material is provided in a narrow tip zone extending axially outwards from the tip along the radially inner face of the additional retention zone for between 3 and 5mm. The tip zone may be 1 to 3mm in thickness i.e. measured radially of the tyre.

The tyre bead may include a chafer ply extending around the bead surface at least from the heel point to a point on the axially inner face of the bead at the radial height of the bead core centre. Preferably the tip zone material is located outside said chafer so that the tip material may directly engage the teeth on a wheel rim.

The resultant tyre has a bead which, whilst being wider than a conventional bead to provide the necessary inter-engagement with its special region, has a standard shape of bead seat without radially projecting toes and so the tyre can be fitted to a standard wheel rim without difficulty.

Thus the invention provides a tyre which can be used on a standard rim when necessary with standard bead retention properties but which when fitted to a special rim has greatly enhanced bead retention properties giving a greater degree of safety. Furthermore the special rim is also able to carry a standard tyre with standard bead retention properties. The invention therefore provides a tyre and wheel rim which allow for full compatibility with standard tyres and wheel rims known in the art.

The assembly may be used on any vehicle including cars, trucks, motor-cycles, aircraft etc.

The tyre may be a cross ply, radial or any other known tyre having reinforced beads.

Some embodiments of the present invention will now be described, by way of example only, to show further aspects of the invention in conjunction with the attached diagrammatic drawings which are as follows:-

Figure 1 is a part cross section of the tyre and wheel rim assembly according to the present invention;

Figure 2 is a part cross section of a tyre and wheel rim assembly of the CTS type with bead retention according to the present invention;

Figure 3 is an enlarged cross sectional view of one bead of the tyre of the present invention;

Figure 4 is an enlarged cross sectional view of the tyre of the present invention on its rim;

Figure 5 is a cross-sectional drawing showing the tyre contacting profile, i.e. the radially outer profile, of a bead seat and flange at one side of a wheel rim of the hump tyre shown in Figures 1 and 4;

Figure 6 is an enlarged view of part of Figure 5;

Figure 7 is an enlarged view of the same region of an alternative rim based on a flat hump wheel rim;

Figure 8 shows the tyre of the present invention on a conventional round humped rim;

Figure 9 shows a conventional tyre on the wheel rim of the present invention;

Figure 10 shows an alternative embodiment of the present invention intended for a contrepente type wheel rim;

Figure 11 shows an embodiment of the present invention for the CTS type of tyre and wheel rim assembly;

Figure 12 is a view of the bead rim of the invention to illustrate the operation of the invention.

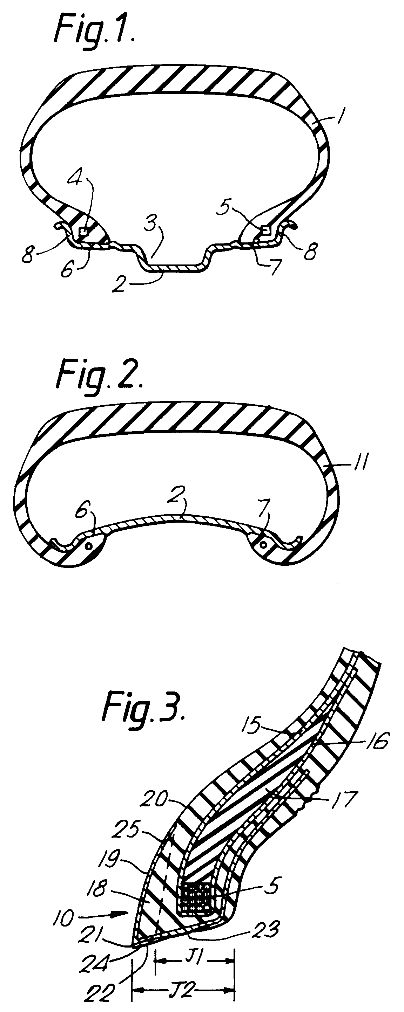

The tyre shown in Figure 1 comprises a tubeless tyre carcass 1 fitted to a wheel rim 2 having a central fitting well 3. The tyre is reinforced by a pair of bead cores 4 and 5 and is also reinforced by conventional carcass and breaker assembly neither of which are shown as the main structure of the tyre is not a feature of the present invention. Again, as is conventional, the wheel rim has two tapered bead seats 6 and 7 which are tapered at 5 degrees and each bead seat has associated therewith an upright flange 8. The tyre and the wheel rim have co-operating engagement features 9 and 10 which will be described later in relation to an enlarged view.

The embodiment shown in Figure 2 is a CTS type tyre and wheel rim assembly. This again has a tyre carcass reinforced by a carcass ply and breakers (not shown) and has two bead seats 6 and 7 which this time are on the radially inner surfaces of the wheel rim 2. The bead seats 6 and 7 are tapered as is normal for this tyre and wheel rim assembly but are provided with additional features similar to those in Figure 1 and which again will be described beneath.

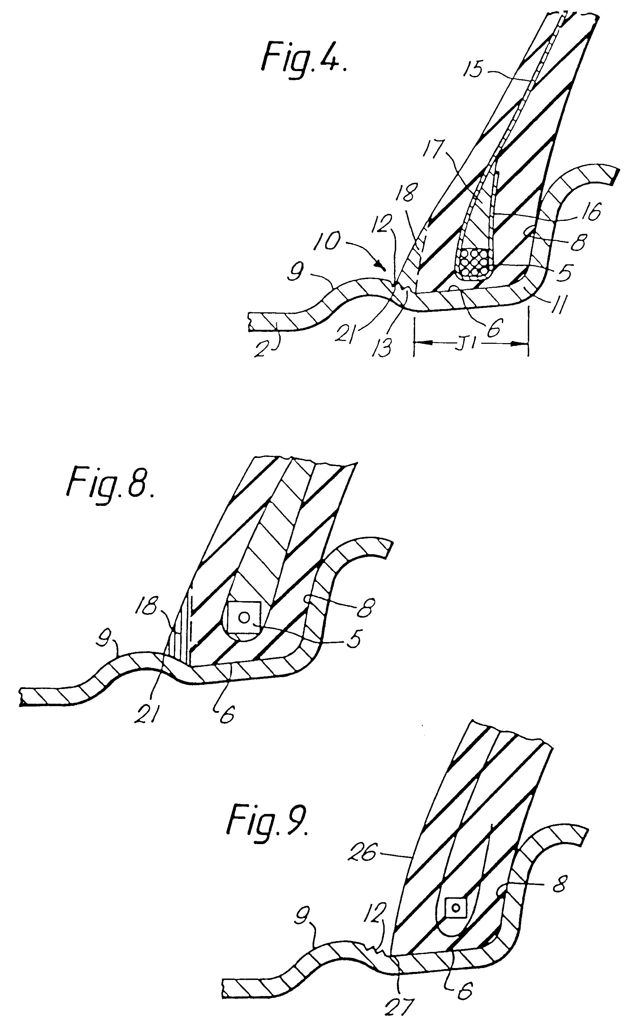

Figure 4 shows an enlarged view of one bead and its co-operating bead seat for the tyre of Figure 1. The version for the CTS type tyre of Figure 2 is exactly the same in features although drawn on the inner face of the wheel rim and this design will not be described in detail.

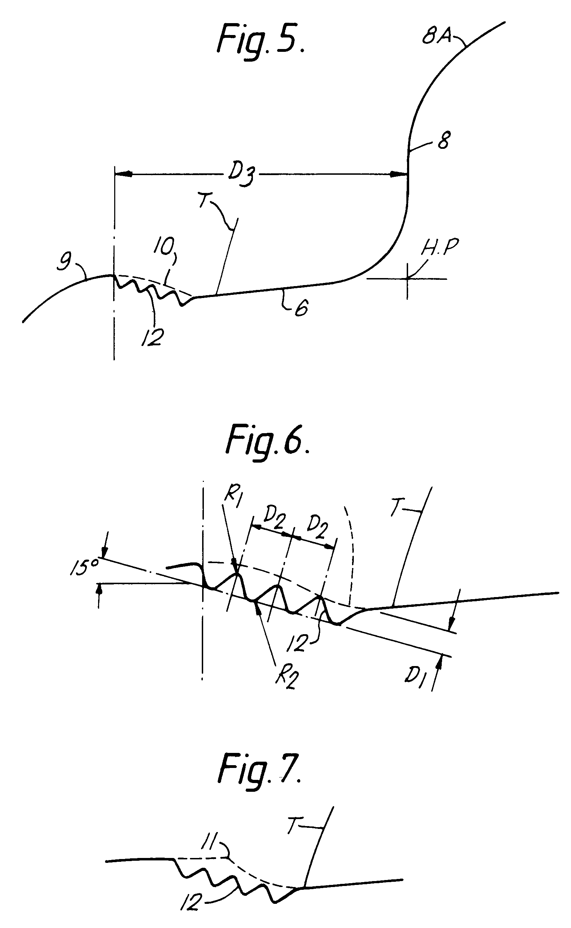

The wheel rim, as shown in Figure 5, is based on a standard wheel rim according to ETRTO dimensions of the round hump type but is modified in one region which will be described in detail below. This particular wheel rim is for a car tyre and therefore comprises a tapered bead seat 6 which is tapered at 5° to the axial direction of the wheel and an upwardly projecting rim flange 8 with a flared out region 8A. The wheel rim is of the nominal diameter for the tyre concerned and has a conventional heel point HP as defined in the ETRTO Standards.

The bead seat 6 has a round hump 9 axially inboard of the seat and this hump 9 is positioned from the heel point HP exactly the same as in a standard rim. In order to show the shape of the standard rim the region 10 marked with a broken line is shown in Figure 5 and in Figure 6.

This particular rim is meant for a 14″ tyre and so it has a hump radius of 8mm and the dimension from the centre of curvature of the hump to the heel point HP is 19.8mm.

In the region of the hump 10 shown by the broken line however four grooves are machined, or otherwise formed, so that three sharp edged teeth 12 are left. These teeth 12 extend circumferentially of the wheel and each tooth has a top radius R1 of 0.25mm, a base radius R2 of 0.3mm and a depth D1 of 0.75mm. The distance D2 between the tops of adjacent teeth is 1.5mm. Thus three sharp teeth 12 are provided on the wheel rim. The distance to the beginning of the first groove is the same as the distance from the centre rib of curvature of the hump 9 from the heel point and therefore D3 in this case is 19.8mm.

The wheel rim shown in Figure 7 is based on a wheel rim of the flat hump type which means that the original wheel profile is shown by numeral 11 but this too is modified in that the profile used comprises a series of three teeth 12, each of the same dimension as those in Figures 5 and 6.

In this case however the wheel rim is meant for a 15″ diameter tyre and so that other dimensions of the wheel rim including the bead seat width are larger than for the smaller tyre described above. Here the distance from the top of the axially most outward tooth 12 to the heel point is 18.0mm and again the top of this tooth is coincident with the flat hump profile whilst the other teeth 12 are below this profile.

The tyre of the present invention comprises a bead core 5 of the 6 x 4 creel type. Any normal bead core may be used including one formed from a single wire wound several times around a former so that only two ends occur. A carcass ply 15 is wrapped in an axially outward direction around the bead core 5 to form an edge turn-up 16 and a bead apex of triangular cross section 17 is positioned upon the bead core 5 as shown. So far the bead is of entirely conventional construction. However the bead is made substantially wider than conventional beads for a tyre of the same size and wider than the bead seat width J1 required to fit International Standard rims. This is achieved by providing a retention zone 18 which is of triangular cross section and which provides an axially inward extension of the bead to make it sufficiently wide so that the axially inner edge of the bead engages the teeth 12. The retention zone 18 is basically triangular in section having an axially inner surface 19 which merges to the line of the inner surface 20 of the main bead region as shown in Figure 3. The retention zone 18 is integral with the main bead region.

The width J2 of the resultant bead is substantially greater than the width J1 of the standard bead. For example a 15″ tyre has a width J2 of 20mm compared with a standard bead width J1 of 17mm.

The retention zone 18 has a profile similar to a standard tyre providing a pointed tip 21 and a bead seat zone 22 which is a straight continuation of the main bead seat 23. In the region of the tip 21 a 1mm thick engagement strip 24 is provided. The strip has a width of 5mm in the axial direction from the tip 21. This strip may extend a short distance up the axially inner surface 19 of the bead but that is not necessary.

The engagement strip 24 comprises rubber compound having a set property at 70 degrees Centigrade of greater than 40%. This provides an engagement zone 24 which effectively creeps around the teeth 12 as will be described below. A chafer strip 25 of cross woven nylon material is positioned in the outer part of the bead extending around the toe from beneath the bead core 5 to provide a skin on the toe of the overall bead. The cords of this strip are preferably laid at 45 degrees. The engagement strip 24 is located on the outer surface of the chafer strip 25.

The engagement strip 24 preferably has a hardness of 80 to 95 degrees IRH and a tear strength measured according to ASTM624 Die C at room temperature greater than 30 N/tp (Newtons per test piece) in order to provide the required properties for use in engaging with the teeth 12.

For the remainder of the bead both the retention zone 14 and the main bead between the bead core 5 and the tip 21 preferably comprise material having an hardness greater than 80 degrees IRH. More preferably the hardness of this zone approaches 95 degrees IRH. This material hardness may be assisted by means of a filler material or other such means to provide overall compression resistance.

Suitable compositions for the engagement strip 24 and the region of the bead between the tip 21 and the core 5 are as follows:

### Engagement Strip Material

|  | pphp |
|---|---|
| Polyoctenylene | 40 |
| Natural rubber | 60 |
| Zinc oxide | 4 |
| Stearic acid | 1 |
| Carbon black N326 | 80 |
| Reinforcing resin | 5 |
| Tackifying resin | 6 |
| HMT | 2 |
| NOBS | 1 |
| Enerflex 94 | 5 |
| Sulphur | 4 |

### Core Material

|  | pphp |
|---|---|
| Natural rubber | 100 |
| High styrene resin | 10 |
| N375 black | 74 |
| Zinc oxide | 4 |
| Stearic acid | 2 |
| Unitol NC7 in 2.4KG PO | 4 |
| Reinforcing resin 65% | 9 |
| Aromatic oil | 6 |
| Sulphur | 4 |
| Hexa | 1.1 |
| NOBS | 0.5 |

6

The resultant materials have the following properties:

<u>Engagement Strip Material</u>

Hardness                      89.3 Wallace D.L.
                                            I.R.H.D.

Set at 70 degrees C       55.2% ASTM

Tear at Room Temp         36 N/Test Piece

**Core Material**

Modulus                       6.7M pa @ 150% ext.

Resilience @ 50 degrees
C (Dunlop Tripsometer)    39.5

Hardness (Wallace DL)     95 IRHD

The tyre and wheel rim of the present invention is shown assembled in Figure 4 where it can clearly be seen that the dimensions of the tyre cause the toe 21 to engage the teeth 12 with the material of the engagement strip 24 on the teeth 12. Thus the tyre is able to fully seat against its flange 8 and on its bead seat 6 whilst the toe 21 engages the teeth 12 by the material of the engagement strip 24 at least partially flowing around the teeth 12. It will be appreciated that fitting of the tyre to wheel rim is entirely conventional with air pressure blowing it home over the hump 9 which, because it is of standard hump diameter, provides no real resistance to tyre fitting.

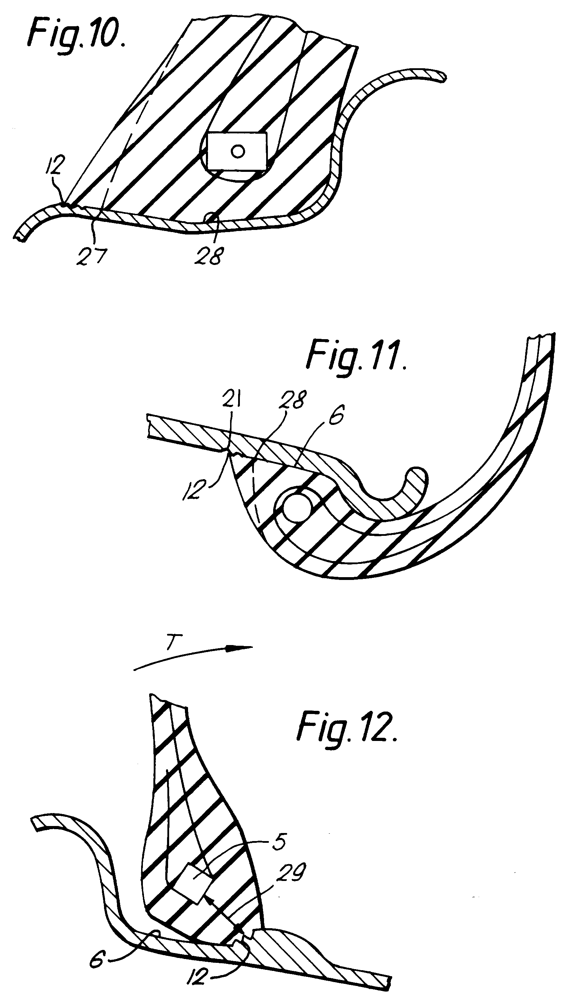

If the tyre of the present invention is fitted to a conventional wheel rim either of the flat ledge type of the round or flat hump type as shown in Figure 8 the tyre seats on the wheel rim in a very similar way to on its own rim except that the engagement strip 24 and the tip 21 simply lie upon the axially outer portion of the hump 9. In this condition the tyre has very similar bead retention properties to a standard tyre on the same rim as will be shown in the results quoted later.

Another possible assembly is a standard tyre bead 26 fitted to the wheel rim of the invention as shown in Figure 9. Here the standard bead width means that the conventional toe 27 is on the main bead seat 6 and the toe does not reach the serrations or teeth 12. Thus as far as a standard tyre is concerned for normal running it is seated on a rim which is entirely standard and when in the dislodgement mode a very similar performance to standard tyre on a standard rim is obtained as again will be shown in the results following.

Figure 10 shows an alternative construction using a contrepente rim provided with a set of teeth 12 positioned again axially inwards of a point where the toe 27 of a standard tyre is seated on the contrepente bead seat 28. Details of the fit of the tyre of the invention to this rim are exactly the same as for the previous embodiment and so they will not be described here.

The tyre and wheel rim shown in Figure 2 of the CTS type has its one bead and bead seat shown enlarged in Figure 11 and once again the bead seat 6 has its normal taper to the point where the toe 28 of the standard CTS tyre reaches and then adjacent thereto but axially inwards of serrations 12 which again engage the tip 21 of the tyre according to the present invention. In this case the bead seat and its extension axially inwards are shown flat, although a round hump or flat hump could be provided.

In use of the present invention the tyre and wheel rim are seated as shown in Figure 4 for all normal running. As mentioned previously fitting of the tyre is entirely conventional using air pressure to blow the beads home over the hump or flat ledge region, past the teeth 12 and onto the bead seat 6 with the bead contacting the flange 8. Due to the construction of the special tyre however its tip 21 is then in engagement with the teeth 12. For normal inflated running of the tyre the bead remains seated firmly on its seat and against its flange 8.

If excessive side force is applied from the tyre/ground interface or, when the tyre is partially deflated which is much more common, when there is complete loss of air pressure within the tyre then axially inward movement of the tyre tread in a conventional tyre and wheel rim assembly causes the bead to move axially inwards from its seat 6 allowing air to leak around the bead and the tyre to lose any remaining air pressure and much more importantly allowing the bead to move axially inwards where it can reach the well of the rim. This can result in the tyre dismounting itself or the flange of the wheel rim contacting the road, both these conditions being very dangerous. Furthermore because the bead is not held at its seat 6 side force cannot be generated by the tyre and vehicle handling is severely affected.

In the present invention however the tip of the tyre engages around the teeth 12 and so inward movement of the tip is resisted and thus the axially inward tread movement which applies a moment T to the bead zone causes rotation of the bead zone with the tip/toe engagement to the teeth 12 acting as a fulcrum. This brings the region 29 of the bead between the core 5 and the tip/tooth engagement point under increasing compression which becomes greater and greater as the amount of rotation increases. This compression force produces a reaction force in the bead hoop of core 5 which causes the hoop to be tensioned and this retains the bead around the circumference of the tyre firmly against the seat 6 so as to prevent bead dislodgement.

It should be noted that the moment T is generated by a force from the tread/road interface a distance away from the bead zone even in a deflated tyre. In contrast when a tyre removal tool or bead breaker is placed against the flange of the wheel rim and pushed against the tyre bead the moment T is not generated and the tyre may be dismounted in the conventional way.

To illustrate the effectiveness of the invention, tyres in size 225/65 VR 15 were manufactured having a bead width of 20mm and using the compounds described above for the engagement strip 24 and the zone of the bead between the core and the tip 21. The tyres were tested on a rim according to the present invention. The tyre was also tested on a standard rim of the same dimensions but without the teeth 12 and then a standard tyre without the retention zone was tested on the wheel rim of the invention.

The test was in two parts and comprised a J turn test and a circling test, both of which are known in the industry for testing bead retention.

The J turn test comprises driving a vehicle with the test unit on the outer front wheel and with the vehicle loaded to its standard maximum load at a pre-set speed and applying as quickly as possible full turning lock whilst declutching. The vehicle then follows a J turn and comes to a halt. The test is repeated with progressive reductions of tyre pressure of 0.2 bar until dislodgement occurs and then if necessary at 0 pressure and higher speed increments.

The circling test comprises driving the vehicle at 60kph in a tangential direction into a 50 metres diameter circle and then maintaining the speed around the circle for one full turn. The vehicle is run in the fully laden condition and once again the tyre pressures are reduced stepwise in steps of 0.2 bar from standard pressure to 1.0 bar and then in steps of 0.1 bar until dislodgement occurs. The following Table shows the results obtained.

### TABLE

| Tyre | Wheel | J Turn Test Pressure/ Speed | Circling Test Dislodgement Pressure |
|---|---|---|---|
| Invention | Invention | 0/40 mph | 0.1 bar |
| Invention | Standard flat hump | 0.7 bar | 0.8 bar |
| Standard Tyre | Invention | 0.9 bar | 0.7 bar |
| Standard Tyre | Standard hump | 0.9 bar | 1.0 bar |

As can clearly be seen the tyre of the present invention has a substantially improved bead retention property over all other combinations. Furthermore full compatibility of different tyres on different rims was achieved from those which would have been expected for a tyre or wheel rim not according to the present invention.

For the tooth dimensions tests have shown that radii as small as 0.2mm are successful with tyres having the materials for the tyre toe tip as described. Radii smaller than 0.2mm have been found to be sufficiently sharp to damage tyres on dislodgement and sometimes on fitting and/or stripping, both of the special type and occasionally standard tyres when they are fitted to the wheel rim.

With regard to the greatest radius, recent tests have shown for a car tyre that 0.27mm is a suitable maximum which provides a tooth still sufficiently sharp to give good retention properties, although the figures given in the original Application of up to 2mm are still valid depending upon the properties selected for the tip material.

Similarly different tooth depths can be used although a minimum of 0.65mm and a maximum of 0.85mm have been found to be particularly effective for a car wheel rim together with the range of 1.3 to 1.8mm for the distance from the top of one tooth to the top of the next adjacent tooth.

It must be noted that in each case the teeth are provided in the region of the wheel rim which is not contacted by a standard tyre if it is fitted to the wheel rim. Such a standard tyre is indicated by the line T in each of Figures 5, 6 and 7.

## Claims

1. A tyre and wheel rim assembly for a vehicle, the tyre (1) comprising a pair of bead regions each reinforced by a bead core (4,5) and the wheel rim (2) comprising a pair of bead seats (6,7) characterised by one bead region of the tyre having an additional retention zone (18) positioned axially inwards of and integral with the main bead region, the retention zone (18) having an axially inner tip or toe (21) substantially inwards of the main bead region, the tip having an engagement strip (24) formed by a material having a set property at 70°C of greater than 40% and the construction of the bead between the bead core (5) and tip (21) providing substantial resistance to compressive forces therebetween, and the wheel rim (2) comprises axially inwards of and adjacent to one of the bead seats (6,7), which is that part of the bead seat contacted by a standard tyre, a circumferentially extending tooth (12) having a sharp edge or top of a small radius of less than 2mm inter- engaging the engagement strip (24) such that when lateral force is applied to the tyre tread and internal inflation pressure is low, axially inward movement of the tip (21) is resisted by the inter-engagement thus causing bead rotation about the tip (21) and generation of compression force in those parts of the bead region between the tip (21) and the core (5) to provide bead retention at the bead seat.

2. A tyre and wheel rim assembly according to claim 1 characterised in that the axial width of the retention zone (18) is 5 to 30% of the bead width (J dimension) and the axial width of the main bead region is substantially the same as a standard tyre.

3. A tyre and wheel rim assembly according to claim 1 characterised in that the axial width of the retention zone (18) is 15 to 25% of the bead width (J dimension) and the axial width of the main bead region is substantially the same as a standard tyre.

4. A tyre and wheel rim assembly according to claim 1, 2 or 3 characterised in that the bead width (J2) of the tyre from heel point to tip (21), the J dimension, is greater than the axial width of the bead seat (6) of the wheel rim (2).

5. A tyre and wheel rim assembly according to claims 1, 2, 3 or 4 characterised in that the bead seats (6) on the rim are on the radially outer surface of the wheel rim (2) and the bead seats (23) of the tyre are radially inside the bead cores (5).

6. A tyre and wheel rim assembly according to claims 1, 2, 3 or 4 characterised in that the bead seats (6,7) are on the radially inner surface of the wheel rim (2) and the tyre (11) has bead regions with seats radially outside the bead cores.

7. A tyre and wheel rim assembly according to any of claims 1 to 6 characterised in that the bead seats (6,7) are tapered.

EP 0 434 403 B1

8. A tyre and wheel rim assembly according to any of claims 1 to 7 characterised in that the bead seats (6,7) comprise more than one angle of taper.

9. A wheel rim for the tyre and wheel rim assembly of any one of claims 1 to 8 comprising a pair of bead seats (6,7) axially spaced apart and adjacent to one of the bead seats and axially inwards thereof a circumferentially extending tooth (12) having a small radius edge or top.

10. A wheel rim according to claim 9 characterised in that the small radius is 0.20 to 0.70mm

11. A wheel rim according to claim 9 characterised in that the small radius is 0.20 to 0.30mm.

12. A wheel rim according to claim 9 characterised in that the small radius is 0.20 to 0.27mm.

13. A wheel rim according to any one of claims 9 to 12 characterised in that the depth of each tooth (12) is in the range of 0.65 to 0.85mm.

14. A wheel rim according to any one claims 9 to 13 characterised in that the distance from the top of one tooth (12) to the next adjacent tooth is in the range of 1.3 to 1.8mm.

15. A wheel rim according to any one claims 9 to 13 characterised in that the distance from the top of one tooth (12) to the next adjacent tooth is in the range of 1.2 to 1.8mm.

16. A wheel rim according to claim 15 characterised in that the distance from the top of one tooth (12) to the next adjacent tooth is 1.5mm.

17. A wheel rim according to any of claims 9 to 16 characterised in that three distinct teeth (12) are provided.

18. A wheel rim according to any of claims 9 to 17 characterised by a bead retaining hump (9) axially inwards of and adjacent to the inner edge of the bead seat (6,7).

19. A wheel rim according to any of claims 9 to 17 characterised by a flat ledge axially inwards of and adjacent to the inner edge of the bead seat (6,7).

20. A wheel rim according to claimm 18 or 19 characterised in that the tooth or teeth (12) are provided in the zone of the inner edge of the bead seat (6,7) and the hump (9) or flat ledge such that a standard tyre bead can be seated without the standard tyre lying on a tooth (12).

21. A wheel rim according to any of claims 9 to 20 characterised in that the top of the tooth or teeth (12) lies radially inside the profile of a standard rim of the nominal size.

22. A wheel rim according to any one of claims 9 to 21 characterised in that the bead seat (6,7) is tapered so that it extends at an angle to the axial direction of the wheel rim (2).

23. A tyre having in at least one bead a circumferentially extending inextensible bead hoop (9) characterised by an additional retention zone positioned axially inwards of and integral with the main bead region, the additional retention zone having an axially inner tip or toe (21) substantially inwards of the main bead region, the construction of the bead between the bead core (5) and the tip (21) having an engagement strip (24) such as to provide substantial form stiffness to withstand compression forces between the core (5) and tip (21) and the tip (21) of the tyre (1) being formed by a material having a set property at 70° Centigrade of greater than 40% such that when the tyre is fitted to a wheel rim having sharp teeth in the region contacted by the engagement strip (24) the material engages the teeth.

24. A tyre according to claim 23 characterised in that the elastomeric material between the bead core (5) and the tip (21) has a hardness of 80 to 95 degrees IRH.

25. A tyre according to claim 23 or 24 characterised in that the bead between the core (5) and the tip (21) includes a reinforcement material to provide resistance to the compression force.

10

26. A tyre according to claim 23, 24 or 25 characterised by a chafer layer (25) extending around the outer periphery of the bead from a point under the bead core (5), around the tip (21) and to a second point at least as high as the core centreline on the interior of the tyre (1) to provide a skin reinforcement for the bead.

27. A tyre according to any one of claims 23 to 26 characterised by at the tip (21) of the retention zone (18) on the wheel rim contacting surface a tooth engaging zone (24) comprising elastomeric material having a set at 70° Centigrade of greater than 50%.

28. A tyre according to any of claims 23 to 27 characterised in that the elastomeric material of the tooth engaging zone (24) has a tear strength at room temperature of 30N/tp or more.

**Patentansprüche**

1. Eine Reifen- und Radfelgenanordnung für ein Fahrzeug, wobei der Reifen (1) ein Paar von Wulstbereichen besitzt, von denen jeder durch einen Wulstkern (4, 5) verstärkt ist, und die Radfelge (2) ein Paar von Wulstsitzen (6, 7) besitzt,
   dadurch **gekennzeichnet,** daß
   einer der Wulstbereiche des Reifens eine zusätzliche Haltezone (18) hat, die axial innerhalb von und integral mit dem Hauptwulstbereich positioniert ist, wobei die Haltezone (18) eine axial innere Spitze oder Zehe (21) im wesentlichen innerhalb des Hauptwulstbereiches aufweist, die Spitze einen Eingriffsstreifen (24) hat, der aus einem Material gebildet ist, das eine Setzeigenschaft bei 70°C von mehr als 40% hat, und der Aufbau des Wulstes zwischen dem Wulstkern (5) und der Spitze (21) den Druckkräften zwischen ihnen einen wesentlichen Widerstand entgegensetzt, und die Radfelge (2) axial innerhalb von und neben einem der Wulstsitze (6, 7), der der Teil des Wulstsitzes ist, der von einem Standardreifen berührt wird, einen sich in Umfangsrichtung erstreckenden Zahn (12) mit einer scharfen Kante oder Spitze von einem kleinem Radius von weniger als 2 mm hat, der mit dem Eingriffsstreifen (24) in gegenseitigem Eingriff steht, so daß, wenn eine Seitenkraft auf die Reifenlauffläche wirkt und der Innenaufpumpdruck niedrig ist, einer axial nach innen gerichteten Bewegung der Spitze (21) durch den gegenseitigen Eingriff entgegengewirkt wird und somit eine Wulstdrehung um die Spitze (21) und die Erzeugung einer Druckkraft in jenen Teilen des Wulstbereiches zwischen der Spitze (21) und dem Kern (5) bewirkt wird, um eine Wulsthaltewirkung an dem Wulstsitz zu erzielen.

2. Eine Reifen- und Radfelgenanordnung nach Anspruch 1,
   dadurch **gekennzeichnet,**
   daß die axiale Breite der Haltezone (18) 5 bis 30% der Wulstbreite (J-Dimension) beträgt und die axiale Breite des Hauptwulstbereiches im wesentlichen dieselbe wie der eines Standartreifens ist.

3. Eine Reifen- und Radfelgenanordnung nach Anspruch 1,
   dadurch **gekennzeichnet,**
   daß die axiale Breite der Haltezone (18) 15 bis 25% der Wulstbreite (J-Dimension) beträgt und die axiale Breite des Hauptwulstbereiches im wesentlichen dieselbe wie die eines Standardreifens ist.

4. Eine Reifen- und Radfelgenanordnung nach Anspruch 1, 2 oder 3,
   dadurch **gekennzeichnet,**
   daß die Wulstbreite (J2) des Reifens von dem Fersenpunkt zur Spitze (21), die J-Dimension, größer ist als die axiale Breite des Wulstsitzes (6) der Radfelge (2).

5. Eine Reifen- und Radfelgenanordnung nach den Ansprüchen 1, 2, 3 oder 4,
   dadurch **gekennzeichnet,**
   daß sich die Wulstsitze (6) an der Felge an der radial äußeren Fläche der Radfelge (2) befinden und daß die Wulstsitze (23) des Reifens radial innerhalb der Wulstkerne (5) liegen.

6. Eine Reifen- und Radfelgenanordnung nach den Ansprüchen 1, 2, 3 oder 4,
   dadurch **gekennzeichnet,**
   daß die Wulstsitze (6, 7) an der radial inneren Fläche der Radfelge (2) liegen und der Reifen (11) Wulstbereiche mit Sitzen radial außerhalb der Wulstkerne hat.

7. Eine Reifen- und Radfelgenanordnung nach irgendeinem der Ansprüch 1 bis 6,
dadurch **gekennzeichnet,**
daß die Wulstsitze (6, 7) geneigt sind.

8. Eine Reifen- und Radfelgenanordnung nach irgendeinem der Ansprüch 1 bis 7,
dadurch **gekennzeichnet,**
daß die Wulstsitze (6, 7) mehr als einen Neigungswinkel haben.

9. Eine Radfelge für die Reifen- und Radfelgenanordnung nach irgendeinem der Ansprüche 1 bis 8,
mit einem Paar von Wulzsitzen (6, 7), die axial beabstandet sind, und einem neben einem der Wulstsitze und axial innerhalb von diesen liegenden, sich in Umfangsrichtung erstreckenden Zahn (12) mit einer Kante oder Spitze von kleinem Radius.

10. Eine Radfelge nach Anspruch 9,
dadurch **gekennzeichnet,**
daß der kleine Radius 0,20 bis 0,70 mm beträgt.

11. Eine Radfelge nach Anspruch 9,
dadurch **gekennzeichnet,**
daß der kleine Radius 0,2 bis 0,30 mm beträgt.

12. Eine Radfelge nach Anspruch 9,
dadurch **gekennzeichnet,**
daß der kleine Radius 0,20 bis 0,27 mm beträgt.

13. Eine Radfelge nach irgendeinem der Ansprüch 9 bis 12,
dadurch **gekennzeichnet,**
daß die Tiefe jedes Zahns (12) in dem Bereich von 0,65 bis 0,85 mm liegt.

14. Eine Radfelge nach irgendeinem der Ansprüche 9 bis 13,
dadurch **gekennzeichnet,**
daß der Abstand von der Spitze eines Zahns (12) zu dem nächsten benachbarten Zahn im Bereich von 1,3 bis 1,8 mm liegt.

15. Eine Radfelge nach irgendeinem der Ansprüche 9 bis 13,
dadurch **gekennzeichnet,**
daß der Abstand von der Spitze eines Zahns (12) zu dem nächsten benachbarten Zahn in dem Bereich von 1,2 bis 1,8 mm liegt.

16. Eine Radfelge nach Anspruch 15,
dadurch **gekennzeichnet,**
daß der Abstand von der Spitze eines Zahns (12) zu dem nächsten benachbarten Zahn 1,5 mm beträgt.

17. Eine Radfelge nach irgendeinem der Ansprüche 9 bis 16,
dadurch **gekennzeichnet,**
daß drei unterschiedliche Zähne (12) vorgesehen sind.

18. Eine Radfelge nach irgendeinem der Ansprüch 9 bis 17,
**gekennzeichnet** durch
einen Wulsthaltehump (9) axial innerhalb von und neben der Innenkante des Wulstsitzes (6, 7).

19. Eine Radfelge nach irgendeinem der Ansprüche 9 bis 17,
**gekennzeichnet** durch
einen flachen Absatz axial innerhalb von und neben der Innenkante des Wulstsitzes (6, 7).

20. Eine Radfelge nach Anspruch 18 oder 19,
dadurch **gekennzeichnet,**

daß der Zahn oder die Zähne (12) in der Zone der Innenkante des Wulstsitzes (6, 7) und des Humps (9) oder des flachen Absatzes vorgesehen sind, so daß ein Standardreifenwulst aufgesetzt werden kann, ohne daß der Standardreifen auf einem Zahn (12) liegt.

21. Eine Radfelge nach irgendeinem der Ansprüche 9 bis 20,
dadurch **gekennzeichnet,**
daß die Spitze des Zahns oder der Zähne (12) radial innerhalb des Profils einer Standardfelge normaler Größe liegt.

22. Eine Radfelge nach irgendeinem der Ansprüche 9 bis 21,
dadurch **gekennzeichnet,**
daß der Wulstsitz (6, 7) geneigt ist, so daß er sich unter einem Winkel zur Axialrichtung der Radfelge (2) erstreckt.

23. Ein Reifen, der in mindestens einem Wulst eine sich in Umfangsrichtung erstreckende nicht ausdehnbare Wulstschleife (9) besitzt,
**gekennzeichnet** durch
eine zusätzliche Haltezone, die axial innerhalb von und integral mit dem Hauptwulstbereich positioniert ist, wobei die zusätzliche Haltezone eine axial innere Spitze oder Zehe (21) im wesentlichen innerhalb des Hauptwulstbereiches hat, wobei der Aufbau des Wulstes zwischen dem Wulstkern (5) und der Spitze (21) einen Eingriffstreifen (24) hat, um eine wesentliche Formsteifigkeit zu schaffen und so Druckkräften zwischen dem Kern (5) und der Spitze (21) zu widerstehen, und wobei die Spitze (21) des Reifens (1) aus einem Material gebildet ist, das eine Setzeigenschaft bei 70° Zentigrad von größer als 40% hat, so daß, wenn der Reifen auf eine Radfelge mit scharfen Zähnen in dem Bereich, der durch den Eingriffsstreifen (24) berührt wird, aufgezogen wird, das Material mit den Zähnen in Eingriff kommt.

24. Ein Reifen nach Anspruch 23,
dadurch **gekennzeichnet,**
daß ein elastomeres Material zwischen dem Wulstkern (5) und der Spitze (21) eine Härte von 80 bis 95 Grad IRH hat.

25. Ein Reifen nach Anspruch 23 oder 24,
dadurch **gekennzeichnet,**
daß der Wulst zwischen dem Kern (5) und der Spitze (21) ein Verstärkungsmaterial besitzt, um einen Widerstand gegen die Druckkraft zu schaffen.

26. Ein Reifen nach Anspruch 23, 24 oder 25,
**gekennzeichnet** durch
eine Wulstbandstreifenschicht (25), die sich um den Außenumfang des Wulstes von einem Punkt unterhalb des Wulstkerns (5) um die Spitze (21) und zu einem zweiten Punkt, der zumindest so hoch liegt wie die Kernmittellinie an dem Inneren des Reifens (1), erstreckt, um eine Hautverstärkung für den Wulst zu schaffen.

27. Ein Reifen nach irgendeinem der Ansprüch 23 bis 26,
**gekennzeichnet** durch
eine Zahneingriffszone (24) an der Spitze (21) der Haltezone (18) an der Radfelgenkontaktfläche mit einem elastomeren Material mit einem Setzwert bei 70° Zentigrad von größer als 50%.

28. Ein Reifen nach irgendeinem der Ansprüche 23 bis 27,
dadurch **gekennzeichnet,**
daß das elastomere Material der Zahneingriffszone (24) eine Reißkraft bei Raumtemperatur von 30N/tp oder mehr hat.

**Revendications**

1. Ensemble à pneumatique et jante de roue destiné à un véhicule, le pneumatique (1) comprenant une paire de régions de talon, renforcées chacune par une tringle (4, 5), la jante (2) comprenant deux sièges (6, 7) de talon, caractérisé par une région de talon du pneumatique ayant une zone supplémen-

EP 0 434 403 B1

taire de retenue (18) placée axialement vers l'intérieur de la région principale de talon et solidaire de cette région, la zone de retenue (18) ayant un bout ou pointe axialement interne (21) placé pratiquement vers l'intérieur de la région principale de talon, le bout ayant une bande de contact (24) formée par une matière ayant une propriété de déformation à 70 °C qui est supérieure à 40 %, la construction du talon, entre la tringle (5) et le bout (21), donnant une résistance importante aux forces de compression entre eux, et la jante (2) comporte, axialement vers l'intérieur de l'un des sièges (6, 7) de talon et près de ce siège qui constitue la partie du siège au contact d'un pneumatique normal, une dent (12) disposée circonférentiellement et ayant une partie supérieure ou bord effilé de petit rayon inférieur à 2 mm, coopérant avec la bande de contact (24) de manière que, lorsqu'une force latérale est appliquée à la bande de roulement du pneumatique et une pression interne de gonflage a une faible valeur, un mouvement axial vers l'intérieur du bout (21) rencontre la résistance due au contact si bien qu'une rotation du talon est provoquée autour du bout (21) avec création d'une force de compression dans les parties de la région de talon comprise entre le bout (21) et la tringle (5) afin qu'une retenue de talon soit assurée au niveau du siège de talon.

2. Ensemble à pneumatique et jante de roue selon la revendication 1, caractérisé en ce que la largeur axiale de la zone de retenue (18) est comprise entre 5 et 30 % de la largeur du talon (dimension J), et la largeur axiale de la région principale de talon est pratiquement égale à celle d'un pneumatique normal.

3. Ensemble à pneumatique et jante de roue selon la revendication 1, caractérisé en ce que la largeur axiale de la zone de retenue (18) est comprise entre 15 et 25 % de la largeur du talon (dimension J), et la largeur axiale de la région principale de talon est pratiquement égale à celle d'un pneumatique normal.

4. Ensemble à pneumatique et jante de roue selon la revendication 1, 2 ou 3, caractérisé en ce que la largeur de talon (J2) du pneumatique, du coin jusqu'au bout (21), c'est-à-dire la dimension J, est supérieure à la largeur axiale du siège de talon (6) de la jante (2).

5. Ensemble à pneumatique et jante de roue selon la revendication 1, 2, 3 ou 4, caractérisé en ce que les sièges (6) de talon placés sur la jante sont à la surface radialement externe de la jante (2), et les sièges (23) de talon du pneumatique sont placés radialement à l'intérieur des tringles (5).

6. Ensemble à pneumatique et jante de roue selon la revendication 1, 2, 3 ou 4, caractérisé en ce que les sièges (6, 7) de talon se trouvent à la surface radialement interne de la jante (2), et le pneumatique (11) a des régions de talon qui se logent radialement à l'extérieur des tringles.

7. Ensemble à pneumatique et jante de roue selon l'une des revendications 1 à 6, caractérisé en ce que les sièges (6, 7) de talon sont inclinés.

8. Ensemble à pneumatique et jante de roue selon l'une des revendications 1 à 7, caractérisé en ce que les sièges (6, 7) des talons ont plusieurs angles d'inclinaison.

9. Jante de roue, destinée à un ensemble à pneumatique et jante selon l'une quelconque des revendications 1 à 8, comprenant une paire de sièges (6, 7) de talon espacés axialement et adjacents à l'un des sièges de talon et, en direction axiale vers l'intérieur, une dent circonférentielle (12) ayant une partie supérieure ou bord de petit rayon.

10. Jante de roue selon la revendication 9, caractérisée en ce que le petit rayon est compris entre 0,20 et 0,70 mm.

11. Jante de roue selon la revendication 9, caractérisée en ce que le petit rayon est compris entre 0,20 et 0,30 mm.

12. Jante de roue selon la revendication 9, caractérisée en ce que le petit rayon est compris entre 0,20 et 0,27 mm.

14

13. Jante de roue selon l'une quelconque des revendications 9 à 12, caractérisée en ce que la profondeur de chaque dent (12) est comprise entre 0,65 et 0,85 mm.

14. Jante de roue selon l'une quelconque des revendications 9 à 13, caractérisée en ce que la distance comprise entre la partie supérieure d'une dent (12) et la dent adjacente est comprise entre 1,3 et 1,8 mm.

15. Jante de roue selon l'une quelconque des revendications 9 à 13, caractérisée en ce que la distance comprise entre la partie supérieure d'une dent (12) et la dent adjacente est comprise entre 1,2 et 1,8 mm.

16. Jante de roue selon la revendication 15, caractérisée en ce que la distance comprise entre la partie supérieure d'une dent (12) et la dent adjacente est égale à 1,5 mm.

17. Jante de roue selon l'une des revendications 9 à 16, caractérisée en ce que trois dents distinctes (12) sont présentes.

18. Jante de roue selon l'une quelconque des revendications 9 à 17, caractérisée par une bosse (9) de retenue de talon placée axialement vers l'intérieur du bord interne du siège (6, 7) de talon et adjacente à ce bord.

19. Jante de roue selon l'une des revendications 9 à 17, caractérisée par un rebord plat disposé axialement vers l'intérieur du bord interne du siège (6, 7) de talon et adjacent à ce bord.

20. Jante de roue selon la revendication 18 ou 19, caractérisée en ce que la dent ou les dents (12) sont placées dans la zone du bord interne du siège (6, 7) de talon et de la bosse (9) ou du rebord plat de manière qu'un talon de pneumatique normal puisse se loger sans que le pneumatique normal ne soit placé sur une dent (12).

21. Jante de roue selon l'une des revendications 9 à 20, caractérisée en ce que la partie supérieure de la dent ou des dents (12) est placée radialement vers l'intérieur du profil d'une jante normale de dimension nominale.

22. Jante de roue selon l'une des revendications 9 à 21, caractérisée en ce que le siège (6, 7) de talon est incliné afin qu'il forme un angle avec la direction axiale de la jante (2).

23. Pneumatique ayant, dans un talon au moins, un cercle inextensible (9) de talon disposé circonférentiellement, caractérisé par une zone supplémentaire de retenue disposée axialement vers l'intérieur de la région principale de talon et solidaire de cette région, la zone supplémentaire de retenue ayant une pointe ou un bout axialement interne (21) qui se trouve pratiquement vers l'intérieur de la région principale de talon, la construction du talon, entre la tringle (5) et le bout (21), ayant une bande de contact (24) telle qu'elle donne une rigidité importante de forme pouvant encaisser des forces de compression entre la tringle (5) et le bout (21), le bout (21) du pneumatique (1) étant formé d'une matière ayant une propriété de déformation à 70 °C qui est supérieure à 40 %, si bien que, lorsque le pneumatique est monté sur une jante ayant des dents effilées dans la région qui est au contact de la bande de contact (24), la matière est au contact des dents.

24. Pneumatique selon la revendication 23, caractérisé en ce que la matière élastomère comprise entre la tringle (5) et le bout (21) a une dureté comprise entre 80 et 95 °IRH.

25. Pneumatique selon la revendication 23 ou 24, caractérisé en ce que le talon compris entre la tringle (5) et le bout (21) comprend une matière de renforcement destinée à donner de la résistance à une force de compression.

26. Pneumatique selon la revendication 23, 24 ou 25, caractérisé par une couche d'usure (25) disposée autour de la périphérie externe du talon depuis un point qui se trouve sous la tringle (5), autour du bout (21), et vers un second point placé à une hauteur au moins égale à celle de l'axe central de la tringle à l'intérieur du pneumatique (1) afin qu'un renforcement superficiel soit formé pour le talon.

27. Pneumatique selon l'une des revendications 23 à 26, caractérisé par une zone (24) de contact avec une dent, placée au bout (21) de la zone de retenue (18) à la surface de contact avec la jante, cette zone comprenant une matière élastomère ayant une déformation à 70 °C qui est supérieure à 50 %.

28. Pneumatique selon l'une des revendications 23 à 27, caractérisé en ce que la matière élastomère de la zone (24) de contact avec la dent a une résistance à la déchirure à température ambiante qui est supérieure ou égale à 30 N/tp.

## Fig.1.

## Fig.2.

## Fig.3.

Fig.4.

Fig.8.

Fig.9.

Fig.5.

Fig.6.

Fig.7.

Fig.10.

Fig.11.

Fig.12.